# FASCICULE DE BREVET EUROPEEN

(11) **EP 4 056 477 B1**
(45) Date de publication et mention de la délivrance du brevet: **03.05.2023**
(21) Numéro de dépôt: 22160680.9
(22) Date de dépôt: 08.03.2022
(51) Int. Cl.: B64D 27/26, B64D 37/30

(54) **MÂT D'AÉRONEF COMPRENANT UNE STRUCTURE PRIMAIRE TUBULAIRE INTÉGRANT AU MOINS UNE CANALISATION À DOUBLE PEAU ET AÉRONEF COMPORTANT AU MOINS UN TEL MÂT**
FLUGZEUGMAST MIT EINER ROHRFÖRMIGEN PRIMÄRSTRUKTUR, DIE MINDESTENS EINE DOPPELWANDIGE ROHRLEITUNG UMFASST, UND FLUGZEUG MIT MINDESTENS EINEM SOLCHEN MAST
AIRCRAFT MAST COMPRISING A TUBULAR PRIMARY STRUCTURE INCLUDING AT LEAST ONE PIPE WITH DOUBLE SKIN AND AIRCRAFT CONTAINING AT LEAST ONE SUCH MAST

(30) Priorité: 11.03.2021 FR 2102383
(43) Date de publication de la demande: 14.09.2022
(73) Titulaire: AIRBUS OPERATIONS (S.A.S.), 31060 Toulouse (FR)
(72) Inventeur: CZAPLA, Lionel, 31060 TOULOUSE (FR); LABARTHE, Christophe, 31060 TOULOUSE (FR); HORDE, Théophile, 31060 TOULOUSE (FR)
(74) Mandataire: Jardel, Marc Henry Philippe

(56) Documents cités:
- US-A1- 2015 219 048
- US-A1- 2016 052 637
- US-A1- 2018 334 259
- US-B2- 7 121 504

## Description

La présente demande se rapporte à un mât d'aéronef comprenant une structure primaire tubulaire intégrant au moins une canalisation à double peau ainsi qu'à un aéronef comportant au moins un tel mât.

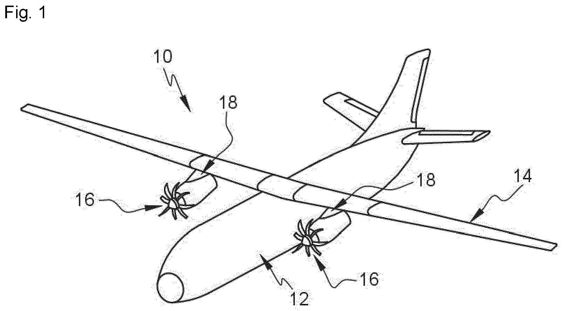

Selon un mode de réalisation visible sur la figure 1, un aéronef 10 comprend un fuselage 12, au moins une aile 14 reliée au fuselage 12 ainsi que des ensembles propulsifs 16 positionnés sous les ailes 14.

Chaque ensemble propulsif 16 est relié à l'aile 14 grâce à un mât 18 qui comprend une structure primaire assurant, entre autres, la reprise des efforts entre l'ensemble propulsif 16 et l'aile 14 ainsi qu'une structure secondaire formant un carénage aérodynamique externe dans lequel est positionnée la structure primaire.

Selon un mode de réalisation, la structure primaire est une structure en caisson délimitée par des panneaux latéraux, supérieur et inférieur, à l'intérieur de laquelle sont logés de nombreux éléments reliant chaque ensemble propulsif au reste de l'aéronef, comme une canalisation pour le carburant par exemple.

Dans le cas, d'un ensemble propulsif fonctionnant à l'hydrogène, les canalisations doivent être des canalisations à double peau et comprennent un conduit interne dans lequel circule l'hydrogène ainsi qu'un conduit externe dans lequel est positionné le conduit interne de manière sensiblement coaxiale. Une telle canalisation est relativement volumineuse ce qui tend à complexifier son intégration dans le mât ainsi qu'à augmenter la section du mât et donc à réduire les performances aérodynamiques de l'aéronef.

La présente invention vise à remédier à tout ou partie des inconvénients de l'art antérieur.

A cet effet, l'invention a pour objet un mât d'aéronef tel que revendiqué à la revendication 1. La demande de brevet US2018/334259 décrit le préambule de la revendication 1.

La solution selon l'invention permet de réduire l'encombrement à l'extérieur des tubes structuraux de la structure primaire, facilite l'intégration d'autres équipements à l'intérieur du mât et potentiellement l'amélioration des performances aérodynamiques du mât en réduisant sa section.

L'invention a également pour objet un aéronef comprenant au moins un mât tel que revendiqué à la revendication 1.

D'autres caractéristiques et avantages ressortiront de la description de l'invention qui va suivre, description donnée à titre d'exemple uniquement, en regard des dessins annexés parmi lesquels :
La figure 1 est une représentation schématique d'un aéronef,
La figure 2 est une vue en perspective d'un ensemble propulsif et d'un mât d'un aéronef, la structure secondaire du mât étant transparente,

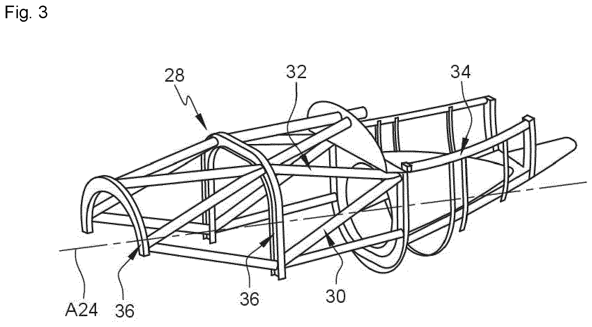

La figure 3 est une vue en perspective d'une structure primaire tubulaire d'un mât d'aéronef illustrant un mode de réalisation de l'invention,
La figure 4 est une vue en perspective d'une partie de la structure primaire visible sur la figure 3, un tube structural partiellement transparent, illustrant une première configuration de l'invention,
La figure 5 est une vue en perspective d'une partie de la structure primaire visible sur la figure 3, un tube structural partiellement transparent, illustrant une deuxième configuration de l'invention,
La figure 6 est une représentation schématique d'un raccordement entre la structure primaire et une canalisation à double peau illustrant un premier mode de réalisation de l'invention,
La figure 7 est une représentation schématique d'un raccordement entre la structure primaire et une canalisation à double peau illustrant un deuxième mode de réalisation de l'invention,
La figure 8 est une représentation schématique d'un raccordement entre la structure primaire et une canalisation à double peau ne relève pas de l'invention et n'est pas présentée qu'à titre illustratif,
La figure 9 est une représentation schématique d'une partie de la structure primaire visible sur la figure 4,

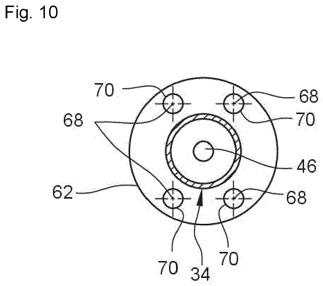

La figure 10 est une coupe transversale selon la ligne X-X de la figure 9.

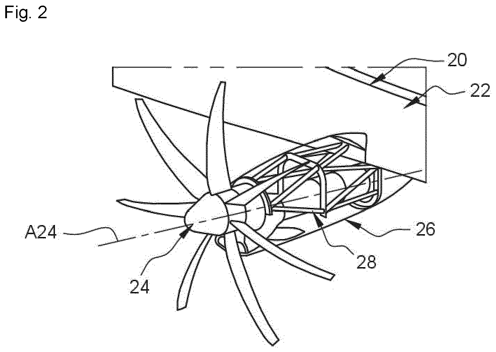

Comme illustré sur la figure 2, un aéronef 20 comprend au moins une aile 22, au moins un moteur 24 à hélice ainsi qu'au moins un mât 26 reliant le moteur 24 et l'aile 22.

Pour la suite de la description, la direction longitudinale est parallèle à l'axe moteur A24. Un plan transversal est perpendiculaire à la direction longitudinale ou à l'axe moteur A24.

Le mât 26 comprend une structure primaire 28 ainsi qu'une structure secondaire formant un carénage aérodynamique autour de la structure primaire 28. Cette dernière comprend une attache moteur 28.1 pour la relier au moteur 24 ainsi qu'une attache voilure 28.2 pour la relier à l'aile 22.

La structure primaire 28 est une structure tubulaire et comprend une pluralité de tubes structuraux 30, 32, 34.

Par tube structural, on entend un tube configuré pour assurer la transmission d'une partie des efforts entre le moteur 24 et le reste de l'aéronef 20.

Selon un mode de réalisation, les tubes structuraux 30, 32, 34 sont agencés en treillis et la structure primaire 28 comprend des arceaux 36 positionnés dans des plans transversaux et reliés entre eux par les tubes structuraux 30, 32, 34.

Chaque tube structural 30, 32, 34 comprend une paroi tubulaire P30, P32, P34 séparant une zone intérieure Zi et une zone extérieure Ze.

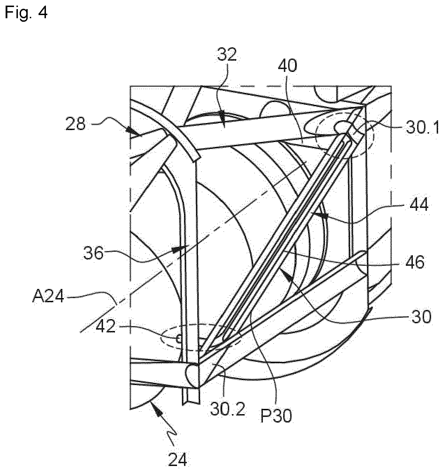

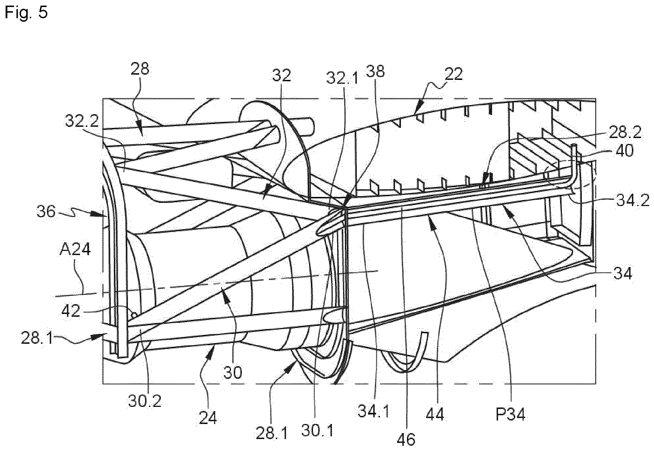

Selon une configuration visible sur les figures 4 et 5, la structure primaire 28 comprend :
a. un premier tube structural 30 qui s'étend entre une première extrémité 30.1 proche de l'aile 22 et une deuxième extrémité 30.2 proche du moteur 24,
b. un deuxième tube structural 32 qui s'étend entre une première extrémité 32.1 reliée à la première extrémité 30.1 du premier tube structural 30 et une deuxième extrémité 32.2 distante de la deuxième extrémité 30.2 du premier tube structural 30,
c. un troisième tube structural 34 qui présente une première extrémité 34.1 reliée aux premières extrémités 30.1, 32.1 des premier et deuxième tubes structuraux 30, 32 et qui longe l'attache voilure 28.2.

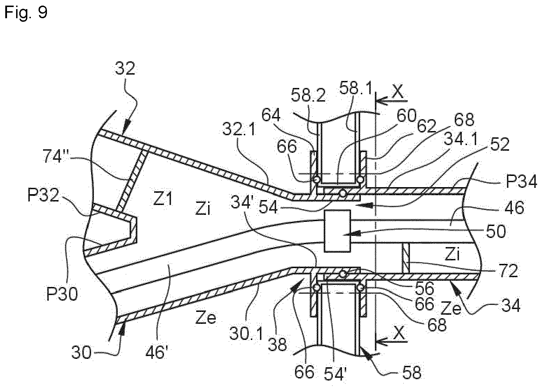

Les premier, deuxième et troisième tubes structuraux 30, 32, 34 forment un Y, le troisième tube structural 34 formant le pied de la forme en Y et les premier et deuxième tubes structuraux 30, 32 formant un V. Selon cette configuration, les premier, deuxième et troisième tubes structuraux 30, 32, 34 sont reliés au niveau d'un noeud 38 correspondant aux premières extrémités 30.1, 32.1, 34.1 des premier, deuxième et troisième tubes structuraux 30, 32, 34. Au niveau du noeud 38, les zones intérieures ZI des premier, deuxième et troisième tubes structuraux 30, 32, 34 communiquent entre elles, comme illustré sur la figure 9.

L'aéronef 20 comprend également au moins un réservoir 39 ainsi qu'au moins une canalisation reliant le réservoir 39 et le moteur 24.

Selon une configuration, cette canalisation comprend un premier tronçon de canalisation 40 en amont du mât 26, un deuxième tronçon de canalisation 42 en aval du mât 26 ainsi qu'un troisième tronçon de canalisation 44 positionné au niveau du mât 26.

Quelle que soit la configuration, le mât 26 comprend au moins un tronçon de canalisation 44.

Selon une particularité de l'invention, le tronçon de canalisation 44 comprend un conduit interne 46 positionné dans la zone intérieure d'au moins un tube structural 30, 32, 34 de la structure primaire 28. Ainsi, le conduit interne 46 et le tube structural 30, 32, 34 forment une canalisation à double peau.

Selon une configuration, le conduit interne 46 pénètre dans la zone intérieure Zi du tube structural 30, 32, 34 ou sort de cette dernière via au moins une extrémité débouchante du tube structural 30, 32, 34. Selon une autre configuration, la structure primaire 28 comprend au moins un trou de passage 48 traversant au moins l'une des parois tubulaires P30, P32, P34 des tubes structuraux 30, 32, 34 de la structure primaire 28, le trou de passage 48 étant configuré pour permettre au conduit interne 46 d'y passer à travers. Selon un mode de réalisation visible sur les figures 4 à 7, la structure primaire 28 comprend un premier trou de passage 48 pour faire rentrer le conduit interne 46 dans la zone intérieure Zi d'au moins un des tubes structuraux 30, 32, 34 de la structure primaire 28 ainsi qu'un deuxième trou de passage 48' pour le faire sortir de la zone intérieure Zi.

Selon une première configuration visible sur la figure 4, le conduit interne 46 chemine à l'intérieur du premier tube structural 30 entre un premier trou de passage 48 positionné à proximité de la première extrémité 30.1 du premier tube structural 30 et un deuxième trou de passage 48' positionné à proximité de la deuxième extrémité 30.2 du premier tube structural 30.

Selon une deuxième configuration visible sur la figure 5, le conduit interne 46 chemine à l'intérieur des premier et troisième tubes structuraux 30, 34 entre un premier trou de passage 48 positionné à proximité de la deuxième extrémité 34.2 du troisième tube structural 34 et un deuxième orifice de passage 48' positionné à proximité de la deuxième extrémité 30.2 du premier tube structural 30.

Selon une configuration, le conduit interne 46 est configuré pour canaliser de l'hydrogène. Selon les cas, il peut comprendre un seul tronçon qui s'étend du réservoir 39 jusqu'au moteur 24 ou plusieurs tronçons reliés entre eux par au moins un raccord 50, comme illustré sur la figure 9.

Selon un mode de réalisation, le mât comprend au moins deux tronçons de conduit interne 46, 46', un raccord 50 reliant les deux tronçons de conduit interne 46, 46', deux tronçons de tubes structuraux 34, 34' et un système de raccordement 52 reliant les deux tronçons de tubes structuraux 34, 34', le raccord 50 et le système de raccordement 52 étant positionnés approximativement dans un même plan.

Selon une configuration visible sur la figure 9, le premier tronçon de tube structural 34 correspond au troisième tube structural 34. Le deuxième tronçon de tube structural 34' prolonge les premières extrémités 30.1, 32.1 des premier et deuxième tubes structuraux 32, 34 de manière à obtenir une forme en Y.

Comme illustré sur la figure 9, le système de raccordement 52 comprend deux extrémités 54, 54' des tronçons de tubes structuraux 34, 34' emmanchées l'une dans l'autre, un système de maintien des deux extrémités 54, 54' des tronçons de tubes structuraux 34, 34' emmanchées l'une dans l'autre ainsi qu'au moins un joint d'étanchéité 56 intercalé entre les deux extrémités 54, 54' des tronçons de tubes structuraux 34, 34' emmanchées l'une dans l'autre.

Selon ce mode de réalisation, le raccord 50 reliant les deux tronçons de conduit interne 46, 46' est un raccord rapide permettant un raccordement sans outillage.

Cet agencement permet d'obtenir un raccordement démontable pour le tronçon de canalisation 44 au niveau du mât 26 ce qui contribue à faciliter le montage et le démontage du moteur 24.

Selon une configuration, la structure primaire 28 comprend un cadre transversal 58 qui présente un orifice 60 dans lequel sont positionnés le raccord 50 et le système de raccordement 52. En complément, le système de maintien comprend une première collerette 62 solidaire du premier tronçon de tube structural 34 et maintenue plaquée contre une première face 58.1 du cadre transversal 58, une deuxième collerette 64 solidaire du deuxième tronçon de tube structural 34' et maintenue plaquée contre une deuxième face 58.2 (opposée à la première face 58.1) du cadre transversal 58, ainsi que des éléments d'étanchéité 66 intercalés entre chacune des première et deuxième collerettes 62, 64 et le cadre transversal 58.

Le système de raccordement 52 comprend des éléments de fixation 68 pour relier les premier et deuxième collerettes 62 et 64 au cadre transversal 58. A cet effet, les première et deuxième collerettes 62, 64 comprennent des orifices 70 pour loger les éléments de fixation 68. Pour au moins une des première et deuxième collerettes 62, 64, les éléments de fixation 68 et les orifices 70 sont configurés pour permettre un léger débattement dans un plan parallèle à la première ou deuxième face 58.1, 58.2 du cadre transversal 58.

Selon un mode de réalisation, la structure primaire 28 comprend au moins un écarteur 72 configuré pour maintenir espacés le conduit interne 46 et la paroi tubulaire P34 du tube structural 34, comme illustré sur la figure 9.

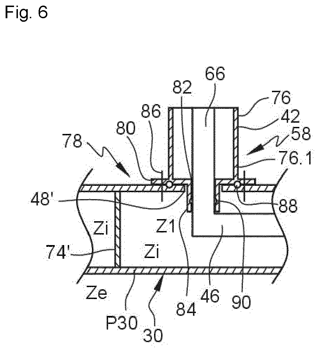

Selon un mode de réalisation visible sur les figures 6, 7 et 9, la structure primaire 28 comprend au moins une cloison 74, positionnée à l'intérieur d'un des tubes structuraux 30, 32, 34, reliée de manière étanche à la paroi tubulaire P30, P32, P34 afin de délimiter dans la zone intérieure Zi une cavité Z1 étanche dans laquelle est positionné le conduit interne 46.

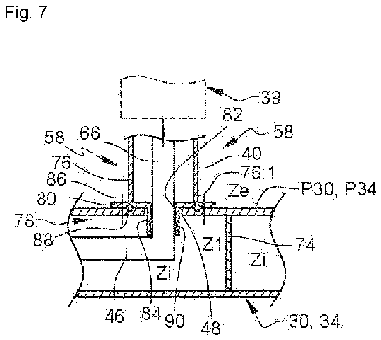

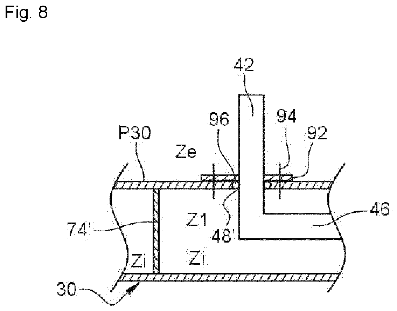

Selon une configuration, la structure primaire 28 comprend une première cloison 74 (visible sur la figure 7) positionnée dans le troisième tube structural 34, à proximité du premier trou de passage 48, une deuxième cloison 74' (visible sur les figures 6 et 8) positionnée dans le premier tube structural 30, à proximité du deuxième trou de passage 48' ainsi qu'une troisième cloison 74' positionnée dans le deuxième tube structural 32, à proximité de sa première extrémité 32.1. Ces cloisons 74, 74' 74" permettent de délimiter avec les parois tubulaires P30, P32, P34 une cavité Z1 étanche.

La cavité Z1 dans laquelle est présent le conduit interne 46, isolée par au moins une cloison 74, 74', 74', peut être remplie d'un gaz inerte, d'une mousse ou être mise sous vide.

Selon une configuration visible sur les figures 6 et 7, le tronçon de canalisation 40, 42 amont et/ou aval comprend un conduit externe 76 pour former avec le conduit interne 46 une canalisation à double peau. Chaque conduit externe 76 comprend une extrémité 76.1 reliée par un raccordement 78 étanche à un des tubes structuraux 30, 34 de la structure primaire 28.

Selon des modes de réalisation visibles sur les figures 6 et 7, ce raccordement 78 comprend une paroi d'extrémité 80 rapportée à l'extrémité 76.1 du conduit externe 76, plaquée contre la paroi tubulaire P30, P34 du tube structural 30, 34 tout autour du premier ou deuxième trou de passage 48, 48'. Cette paroi d'extrémité 80 comprend un orifice de passage 82 traversé par le conduit interne 46.

Le raccordement 78 comprend une extension tubulaire 84, prolongeant l'orifice de passage 82, emmanchée dans le premier ou deuxième trou de passage 48, 48'. Cette extension tubulaire 84 présente un diamètre intérieur sensiblement égal ou légèrement supérieur au diamètre extérieur du conduit interne 46. Le raccordement 78 comprend des éléments de fixation 86 reliant la paroi d'extrémité 80 et la paroi tubulaire P30, P34 du tube structural 30, 34, au moins un premier joint d'étanchéité 88 entourant le premier ou deuxième trou de passage 48, 48', intercalé entre la paroi d'extrémité 80 et la paroi tubulaire P30, P34 du tube structural 30, 34 ainsi qu'au moins un deuxième joint d'étanchéité 90 intercalé entre le conduit interne 46 et l'extension tubulaire 84.

Selon l'exemple visible sur la figure 8, le tronçon de canalisation 40, 42 amont ou aval de la canalisation ne comprend pas de conduit externe. Dans ce cas, le mât comprend un système d'étanchéité entre le conduit interne 46 et la paroi tubulaire P30, P34 du tube structural 30, 32 au niveau du premier ou deuxième trou de passage 48, 48'. Ce système d'étanchéité comprend une collerette 92 solidaire du conduit interne 46 positionnée à l'extérieur du tube structural 30, 34, maintenue plaquée contre la paroi tubulaire P30, P34 du tube structural 30, 34 tout autour du premier ou deuxième trou de passage 48, 48', ainsi qu'au moins un joint d'étanchéité 96 entourant le premier ou deuxième trou de passage 48, 48', intercalé entre la collerette 92 et la paroi tubulaire P30, P34 du tube structural 30, 34. Le système d'étanchéité comprend également des éléments de fixation 94 prévus pour relier la collerette 92 et la paroi tubulaire P30, P34 du tube structural 30, 34.

L'invention n'est pas limitée aux modes de réalisation décrits concernant le moteur 24, le type de fixation du moteur 24 et le fluide circulant dans la canalisation. Ainsi, le moteur 24 pourrait ne pas être à hélice et relié à une autre partie de l'aéronef 20, comme un fuselage par exemple. De plus l'invention n'est pas limitée à l'hydrogène et pourrait convenir pour tout type de fluide.

Quel que soit le mode de réalisation, au moins un tube structural 30, 32, 34 de la structure primaire 28 est utilisé comme conduit externe d'une canalisation. Cette solution permet d'intégrer au moins un conduit à l'intérieur d'au moins un tube structural, ce qui permet de réduire l'encombrement à l'extérieur des tubes structuraux de la structure primaire, facilite l'intégration d'autres équipements à l'intérieur du mât et potentiellement l'amélioration des performances aérodynamiques du mât en réduisant sa section.

De plus, le fait qu'un même élément assure la fonction de tube structural et de conduit externe d'une canalisation contribue à réduire la masse embarquée.

## Revendications

1. Mât d'aéronef comprenant une structure primaire (28) comportant des tubes structuraux (30, 32, 34) ainsi qu'un tronçon de canalisation (44) comportant un conduit interne (46), chaque tube structural (30, 32, 34) comprenant une paroi tubulaire (P30, P32, P34) séparant une zone intérieure (Zi) et une zone extérieure (Ze), le conduit interne (46) du tronçon de canalisation (44) étant positionné dans la zone intérieure (Zi) d'au moins un des tubes structuraux (30, 32, 34) de la structure primaire (28), et la structure primaire (28) comprenant au moins un premier ou deuxième trou de passage (48, 48') traversant au moins l'une des parois tubulaires (P30, P32, P34) des tubes structuraux (30, 32, 34) de la structure primaire (28), le premier ou deuxième trou de passage (48, 48') étant configuré pour permettre au conduit interne (46) d'y passer à travers, le mât comprenant un tronçon de canalisation (40, 42) amont et/ou aval comportant un conduit externe (76) qui forme avec le conduit interne (46) une canalisation à double peau, le conduit externe (76) comprenant une extrémité (76.1) orientée vers un des tubes structuraux (30, 34) de la structure primaire (28) et le mât comprenant un raccordement (78) étanche reliant l'extrémité (76.1) du conduit externe (76) et un des tubes structuraux (30, 34) de la structure primaire (28), **caractérisé en ce que** ce raccordement (78) comprend :
a. une paroi d'extrémité (80) rapportée à l'extrémité (76.1) du conduit externe (76), maintenue plaquée contre la paroi tubulaire (P30, P34) du tube structural (30, 34) tout autour du premier ou deuxième trou de passage (48, 48'), cette paroi d'extrémité (80) présentant un orifice de passage (82) traversé par le conduit interne (46),
b. une extension tubulaire (84), prolongeant l'orifice de passage (82), emmanchée dans le premier ou deuxième trou de passage (48, 48'),
c. au moins un premier joint d'étanchéité (88), entourant le premier ou deuxième trou de passage (48, 48'), intercalé entre la paroi d'extrémité (80) et la paroi tubulaire (P30, P34) du tube structural (30, 34),
d. au moins un deuxième joint d'étanchéité (90) intercalé entre le conduit interne (46) et l'extension tubulaire (84).

2. Mât d'aéronef selon la revendication précédente, **caractérisé en ce que** le mât comprend au moins deux tronçons de conduit interne (46, 46'), un raccord (50) reliant les deux tronçons de conduit interne (46, 46'), des premier et deuxième tronçons de tubes structuraux (34, 34') et un système de raccordement (52) reliant les premier et deuxième tronçons de tubes structuraux (34, 34'), le raccord (50) et le système de raccordement (52) étant positionnés approximativement dans un même plan et **en ce que** le système de raccordement (52) comprend deux extrémités (54, 54') des premier et deuxième tronçons de tubes structuraux (34, 34') emmanchées l'une dans l'autre, un système de maintien des deux extrémités (54, 54') emmanchées l'une dans l'autre ainsi qu'au moins un joint d'étanchéité (56) intercalé entre les deux extrémités (54, 54') emmanchées l'une dans l'autre.

3. Mât d'aéronef selon la revendication précédente, **caractérisé en ce que** la structure primaire (28) comprend un cadre transversal (58) comportant un orifice (60) dans lequel sont positionnés le raccord (50) et le système de raccordement (52) et **en ce que** le système de maintien comprend une première collerette (62) solidaire du premier tronçon de tube structural (34) et maintenue plaquée contre une première face (58.1) du cadre transversal (58), une deuxième collerette (64) solidaire du deuxième tronçon de tube structural (34') et maintenue plaquée contre une deuxième face (58.2) du cadre transversal (58) ainsi que des éléments d'étanchéité (66) intercalés entre chacune des première et deuxième collerettes (62, 64) et le cadre transversal (58).

4. Mât d'aéronef selon l'une des revendications précédentes, **caractérisé en ce que** la structure primaire (28) comprend au moins une cloison (74), positionnée à l'intérieur d'un des tubes structuraux (30, 32, 34), reliée de manière étanche à la paroi tubulaire (P30, P32, P34) afin de délimiter dans la zone intérieure (Zi) une cavité (Z1) étanche dans laquelle est positionné le conduit interne (46).

5. Mât d'aéronef selon l'une des revendications précédentes, **caractérisé en ce que** la structure primaire (28) comprend au moins un écarteur (72) configuré pour maintenir espacés le conduit interne (46) et la paroi tubulaire (P34) du tube structural (34).

6. Aéronef comprenant au moins un mât selon l'une des revendications précédentes.

## Patentansprüche

1. Luftfahrzeugpylon, umfassend eine Primärstruktur (28), die Strukturrohre (30, 32, 34) aufweist, und einen Kanalabschnitt (44), der eine innere Leitung (46) aufweist, wobei jedes Strukturrohr (30, 32, 34) eine Rohrwand (P30, P32, P34) umfasst, die einen inneren Bereich (Zi) und einen äußeren Bereich (Ze) trennt, wobei die innere Leitung (46) des Kanalabschnitts (44) in dem inneren Bereich (Zi) mindestens eines der Strukturrohre (30, 32, 34) der Primärstruktur (28) positioniert ist und die Primärstruktur (28) mindestens ein erstes oder ein zweites Durchgangsloch (48, 48') umfasst, das durch mindestens eine der Rohrwände (P30, P32, P34) der Strukturrohre (30, 32, 34) der Primärstruktur (28) geht, wobei das erste oder das zweite Durchgangsloch (48, 48') dazu ausgestaltet ist, dass die innere Leitung (46) dort hindurchgehen kann, wobei der Pylon einen stromaufwärtigen und/oder stromabwärtigen Kanalabschnitt (40, 42) umfasst, die eine äußere Leitung (76) aufweisen, die mit der inneren Leitung (46) einen doppelhäutigen Kanal bildet, wobei die äußere Leitung (76) ein Ende (76.1) umfasst, das auf eines der Strukturrohre (30, 34) der Primärstruktur (28) ausgerichtet ist, und der Pylon eine dichte Verbindung (78) umfasst, die das Ende (76.1) der äußeren Leitung (76) und eines der Strukturrohre (30, 34) der Primärstruktur (28) verbindet, **dadurch gekennzeichnet, dass** diese Verbindung (78) Folgendes umfasst:
a. eine Endwand (80), die an dem Ende (76.1) der äußeren Leitung (76) angebracht ist und an der Rohrwand (P30, P34) des Strukturrohrs (30, 34) um das erste oder das zweite Durchgangsloch (48, 48') herum in Anlage gehalten wird, wobei diese Endwand (80) eine Durchgangsöffnung (82) aufweist, durch die die innere Leitung (46) geht,
b. eine die Durchgangsöffnung (82) verlängernde Rohrverlängerung (84), die in dem ersten oder dem zweiten Durchgangsloch (48, 48') eingepasst ist,
c. mindestens eine erste Dichtung (88), die das erste oder das zweite Durchgangsloch (48, 48') umgibt und zwischen der Endwand (80) und der Rohrwand (P30, P34) des Strukturrohrs (30, 34) liegt,
d. mindestens eine zweite Dichtung (90), die zwischen der inneren Leitung (46) und der Rohrverlängerung (84) liegt.

2. Luftfahrzeugpylon nach dem vorhergehenden Anspruch, **dadurch gekennzeichnet, dass** der Pylon mindestens zwei innere Leitungsabschnitte (46, 46'), einen Anschluss (50), der die beiden inneren Leitungsabschnitte (46, 46') verbindet, einen ersten und einen zweiten Strukturrohrabschnitt (34, 34') und ein Verbindungssystem (52) umfasst, das den ersten und den zweiten Strukturrohrabschnitt (34, 34') verbindet, wobei der Anschluss (50) und das Verbindungssystem (52) ungefähr in einer selben Ebene positioniert sind, und dass das Verbindungssystem (52) zwei ineinander eingepasste Enden (54, 54') des ersten und des zweiten Strukturrohrabschnitts (34, 34'), ein System zum Halten der beiden ineinander eingepassten Enden (54, 54') und mindestens eine zwischen den beiden ineinander eingepassten Enden (54, 54') liegende Dichtung (56) umfasst.

3. Luftfahrzeugpylon nach dem vorhergehenden Anspruch, **dadurch gekennzeichnet, dass** die Primärstruktur (28) einen Querrahmen (58) umfasst, der eine Öffnung (60) aufweist, in der der Anschluss (50) und das Verbindungssystem (52) positioniert sind, und dass das Haltesystem einen ersten Bund (62), der fest mit dem ersten Strukturrohrabschnitt (34) verbunden ist und in Anlage an einer ersten Fläche (58.1) des Querrahmens (58) gehalten wird, einen zweiten Bund (64), der fest mit dem zweiten Strukturrohrabschnitt (34') verbunden ist und in Anlage an einer zweiten Fläche (58.2) des Querrahmens (58) gehalten wird, sowie Dichtelemente (66) umfasst, die zwischen jedem des ersten und des zweiten Bunds (62, 64) und dem Querrahmen (58) liegen.

4. Luftfahrzeugpylon nach einem der vorhergehenden Ansprüche, **dadurch gekennzeichnet, dass** die Primärstruktur (28) mindestens eine Trennwand (74) umfasst, die im Inneren eines der Strukturrohre (30, 32, 34) positioniert und dicht mit der Rohrwand (P30, P32, P34) verbunden ist, um in dem inneren Bereich (Zi) einen dichten Hohlraum (Z1) zu definieren, in dem die innere Leitung (46) positioniert ist.

5. Luftfahrzeugpylon nach einem der vorhergehenden Ansprüche, **dadurch gekennzeichnet, dass** die Primärstruktur (28) mindestens einen Abstandhalter (72) umfasst, der dazu ausgestaltet ist, die innere Leitung (46) und die Rohrwand (P34) des Strukturrohrs (34) beabstandet zu halten.

6. Luftfahrzeug, umfassend mindestens einen Pylon nach einem der vorhergehenden Ansprüche.

## Claims

1. Aircraft pylon comprising a primary structure (28) comprising structural tubes (30, 32, 34) and a pipe segment (44) having an internal duct (46), each structural tube (30, 32, 34) comprising a tubular wall (P30, P32, P34) that separates an interior zone (Zi) from an exterior zone (Ze), the internal duct (46) of the pipe segment (44) being positioned in the interior zone (Zi) of at least one of the structural tubes (30, 32, 34) of the primary structure (28), and the primary structure (28) comprising at least one first or second passage hole (48, 48') passing through at least one of the tubular walls (P30, P32, P34) of the structural tubes (30, 32, 34) of the primary structure (28), the first or second passage hole (48, 48') being configured to allow the internal duct (46) to pass therethrough, the pylon comprising an upstream and/or downstream pipe segment (40, 42) comprising an external duct (76) which forms, with the internal duct (46), a twin-walled pipe, the external duct (76) comprising an end (76.1) oriented towards one of the structural tubes (30, 34) of the primary structure (28) and the pylon comprising a leak-tight connection (78) connecting the end (76.1) of the external duct (76) and one of the structural tubes (30, 34) of the primary structure (28), **characterized in that** this connection (78) comprises:
a. an end wall (80) fitted to the end (76.1) of the external duct (76) and held clamped against the tubular wall (P30, P34) of the structural tube (30, 34) all around the first or second passage hole (48, 48'), this end wall (80) having a passage orifice (82) through which the internal duct (46) passes,
b. a tubular extension (84) that prolongs the passage orifice (82) and is push-fitted into the first or second passage hole (48, 48'),
c. at least one first seal (88), surrounding the first or second passage hole (48, 48'), interposed between the end wall (80) and the tubular wall (P30, P34) of the structural tube (30, 34),
d. at least one second seal (90) interposed between the internal duct (46) and the tubular extension (84) .

2. Aircraft pylon according to the preceding claim, **characterized in that** the pylon comprises at least two internal duct segments (46, 46'), a connector (50) connecting the two internal duct segments (46, 46'), first and second structural tube segments (34, 34') and a connection system (52) connecting the first and second structural tube segments (34, 34'), the connector (50) and the connection system (52) being positioned approximately in a shared plane, and **in that** the connection system (52) comprises two ends (54, 54') of the first and second structural tube segments (34, 34') push-fitted one inside the other, a system for holding the two ends (54, 54') push-fitted one inside the other and at least one seal (56) interposed between the two ends (54, 54') push-fitted one inside the other.

3. Aircraft pylon according to the preceding claim, **characterized in that** the primary structure (28) comprises a transverse frame (58) comprising an orifice (60) in which are positioned the connector (50) and the connection system (52), and **in that** the holding system comprises a first collar (62) secured to the first structural tube segment (34) and held clamped against a first face (58.1) of the transverse frame (58), a second collar (64) secured to the second structural tube segment (34') and held clamped against a second face (58.2) of the transverse frame (58), and sealing elements (66) interposed between each of the first and second collars (62, 64) and the transverse frame (58).

4. Aircraft pylon according to one of the preceding claims, **characterized in that** the primary structure (28) comprises at least one partition (74) which is positioned inside one of the structural tubes (30, 32, 34) and which is connected in a leak-tight manner to the tubular wall (P30, P32, P34) so as to delimit, in the interior zone (Zi), a leak-tight cavity (Z1) in which the internal duct (46) is positioned.

5. Aircraft pylon according to one of the preceding claims, **characterized in that** the primary structure (28) comprises at least one spacer (72) that is configured to keep spaced apart the internal duct (46) and the tubular wall (P34) of the structural tube (34).

6. Aircraft comprising at least one pylon according to one of the preceding claims.
